# EUROPÄISCHE PATENTSCHRIFT

(11) **EP 2 017 649 B1**
(45) Veröffentlichungstag und Bekanntmachung des Hinweises auf die Patenterteilung: **12.09.2012**
(21) Anmeldenummer: 08104247.5
(22) Anmeldetag: 04.06.2008
(51) Int. Cl.: G01S 17/10, G01S 7/497

(54) **Laserdistanzhandmessgerät mit einem Impulsrückmischverfahren**
Handheld laser distance measuring device using an impulse back-mixing method
Dispositif de mesure manuel de distance au laser avec un procédé de rétromélange par impulsion

(30) Priorität: 16.07.2007 DE 102007000377
(43) Veröffentlichungstag der Anmeldung: 21.01.2009
(73) Patentinhaber: HILTI Aktiengesellschaft, 9494 Schaan (LI); JENOPTIK Laser, Optik, Systeme GmbH, 07739 Jena (DE)
(72) Erfinder: Gogolla, Torsten, 9494, Schaan (LI); Winter, Andreas, 6800, Feldkirch (AT); Seifert, Helmut, 07616, Serba (DE)
(74) Vertreter: Wildi, Roland

(56) Entgegenhaltungen:
- US-A- 3 716 858

## Beschreibung

Die Erfindung bezeichnet ein Laserdistanzhandmessgerät mit einem Impulsrückmischverfahren, insbesondere ein Baulaserdistanzhandmessgerät.

Im Baugewerbe ist im Entfernungsbereich bis zu einigen 100m die exakte Bestimmung der Distanz mit einer Genauigkeit von wenigen mm erforderlich. Die dazu geeignet ausgebildeten Laserdistanzhandmessgeräte, auf welche sich diese Erfindung bezieht, verwenden zur Distanzmessung ein Impulsrückmischverfahren eines modulierten sichtbaren Laserstrahls.

Nach der DE10112833C1 ist ein Laserdistanzhandmessgerät mit einem Impulsrückmischverfahren bekannt. Bei derartigen Impulsrückmisch-Laserdistanzhandmessgeräten mit einem Impulsrückmischverfahren werden als Laserquellen handelsübliche Laserdioden verwendet, die im sichtbaren roten Wellenlängenbereich emittieren. Das emittierte Laserlicht wird mit einer Folge von sehr schmalen Nadelimpulsen - im Folgenden Sendeimpulsfolge genannt - moduliert und mit einer Kollimatorlinse zu einem Messlaserstrahl gebündelt. Dieses spezielle Impulsrückmisch-Laserdistanzhandmessgerät erfordert somit als Sendeimpulsfolge eine Folge von sehr schmalen Laserimpulsen mit einer Breite üblicherweise zwischen 60 ps und 80 ps. Die Impulswiederholfrequenz der Laserimpulse im Bereich von 50 MHz bis 200 MHz ist im Vergleich zu der Impulswiederholfrequenz von einigen 10 kHz bei herkömmlichen Impuls-Laserdistanzhandmessgeräten sehr hoch, so dass bei einer bestimmt festen Impulswiederholfrequenz im Allgemeinen mit einer Messung keine eindeutige Distanzbestimmung im Entfernungsbereich bis zu einigen 100m möglich ist. Somit sind für eine eindeutige Distanzbestimmung mindestens zwei Messungen bei zwei wesentlich verschiedenen Impulswiederholfrequenzen bzw. Differenzen aus Impulswiederholfrequenzen notwendig, für sehr grosse Entfernungsbereiche mit hoher Genauigkeit sogar mehrere verschiedene. Das Steuermittel bestimmt mittels eines Algorithmus die im Allgemeinen nicht eindeutigen Zeitdifferenzen zwischen den Referenz- und den Messimpulsen der niederfrequenten Mischimpulsfolge bei unterschiedlichen Impulswiederholfrequenzen und daraus über ein Gleichungssystem mit Hilfe der Lichtgeschwindigkeit die eindeutige Distanz vom Distanzmesser zum Leuchtfleck auf dem Messobjekt. Die vom Lichtdetektor erfasste Referenzimpulsfolge einerseits und die Messimpulsfolge andererseits werden im Lichtdetektor unmittelbar einer Direktmischung mit anschließender Tiefpassfilterung unterworfen, wobei die Direktmischung unter Steuerung durch eine am Messort lokal erzeugten Lokalozillatorimpulsfolge erfolgt, deren Tastverhältnis gleich oder annähernd gleich dem Tastverhältnis der Messimpulsfolge und deren Wiederholfrequenzen geringfügig verschieden gewählt sind. Die Mischimpulswiederholfrequenz der resultierenden niederfrequenten Mischimpulsfolge entspricht demnach dem Betrag der Differenz zwischen der Impulswiederholfrequenz der Sende- bzw. Messimpulsfolge und der Impulswiederholfrequenz der Lokalozillatorimpulsfolge. Die Zeitbasis wird hierdurch um einen grossen Faktor (z.B. 1 Millionen) gedehnt. Die niederfrequente Mischimpulsfolge besteht wie die hochfrequente Detektionsimpulsfolge (Überlagerung der Messimpulsfolge mit der Referenzimpulsfolge) aus frequenzkonvertierten Referenz- und Messimpulsen, deren Zeitversatz ein Mass für die Distanz ist. Die niederfrequenten Mischimpulsfolge mit einer geringen Mischimpulswiederholfrequenz von beispielsweise kleiner als 1 kHz wird tiefpassgefiltert, verstärkt, mit einem Analog-Digital-Wandler abgetastet und dem Steuermittel zugeführt, welches die Zeitdifferenz zwischen den frequenzkonvertierten Referenz- und Messimpulsen und daraus die (möglicherweise noch nicht eindeutige) Distanz zum Messobjekt bestimmt, welche wie eingangs beschrieben durch Mehrfachmessungen mit verschiedenen Impulswiederholfrequenzen eindeutig bestimmt wird. Bezüglich weiterer Einzelheiten zu dem gattungsbildenden Laserdistanzhandmessgerät mit einem Impulsrückmischverfahren wird der Fachmann auf dieses Dokument verwiesen. Da bei diesem Verfahren zwei geringfügig verschiedene Impulswiederholfrequenzen verwendet werden, wird das Verfahren heterodyne Impulsrückmischung genannt. Bei derartigen heterodynen Verfahren werden kontinuierlich alle Zeiten einer Impulsperiode durchlaufen, obwohl der Informationsgehalt sich nur in sehr kurzen Intervallen befindet, d.h. an den Stellen der Referenz- und Messimpulse. Da die Referenz- und Messimpulse nur wenige Prozent der Impulsperiode ausmachen, wird bei der Frequenzmischung die Messzeit nur zu einem geringen Teil ausgenutzt.

Die Aufgabe der Erfindung besteht in der besseren Ausnutzung der Messzeit beim Impulsrückmischverfahren und somit in einer gesteigerten Empfindlichkeit bzw. Reichweite des Laserdistanzhandmessgerätes.

Die Aufgabe wird im Wesentlichen durch die Merkmale des Anspruchs 1 gelöst. Vorteilhafte Weiterbildungen ergeben sich aus den Unteransprüchen.

So weist ein Impulsrückmisch-Laserdistanzhandmessgerät mit einem Steuermittel zur Berechnung der Distanz zu einem Messobjekt über zumindest eine ermittelbare, mit einer Impulswiederholfrequenz periodische, Zeitdifferenz zwischen einem am Messobjekt reflektierten Messimpuls und einem über eine geräteinterne Referenzstrecke gelaufenen Referenzimpuls eines optisch ausgestrahlten Sendeimpulses, einen Lokaloszillator zur Erzeugung des Sendeimpulses mit der Impulswiederholfrequenz und zumindest eine vom Steuermittel variable steuerbare Verzögerungsschaltung auf, die zwischen dem Lokaloszillator und einem Lichtdetektor und/oder einem Lichtsender angeordnet ist und zur Abtastung des Messimpulses und des Referenzimpulses eine Verzögerung zwischen den Abtastimpulsen und den Sendeimpulsen erzeugt.

Das zugeordnete Messverfahren weist innerhalb des Berechnungsschritts der Distanz aus der zumindest einen Zeitdifferenz zwischen dem Messimpuls und dem Referenzimpuls durch den Algorithmus des Steuermittels, zumindest einen Laufzeitbestimmungsschritt zur Bestimmung der Zeitdifferenz zwischen den Messimpulsen und den Referenzimpulsen auf, sowie innerhalb dessen mehrere Abtastschritte auf, welche die vom Lichtdetektor empfangenen und in einer Impulswiederholfrequenz periodischen Messimpulse bzw. Referenzimpulse direkt am Lichtdetektor mit Abtastimpulsen genau dieser Impulswiederholfrequenz abtasten und das Abtastergebnis vom Steuermittel erfassen, wobei vom Steuermittel mittels der Verzögerungsschaltung eine Verzögerung zwischen den Abtastimpulsen und den Sendeimpulsen gesteuert wird, und in dem übergeordneten Laufzeitbestimmungsschritt die Zeitdifferenz zwischen den Messimpulsen und den Referenzimpulsen aus genau jeweils den Zeitverzögerungen berechnet wird, die erfolgreichen Abtastereignissen zugeordnet sind.

Dabei wird jeweils unter gesteuerter Verzögerung gleichermassen die Verzögerung der Abtastimpulse bezüglich der Sendeimpulse oder die Verzögerung der Sendeimpulse bezüglich der Abtastimpulse verstanden.

Indem die Messimpulse und die Referenzimpulse mit den Abtastimpulsen abgetastet werden, die bei derselben Impulswiederholfrequenz variabel gesteuert zeitverzögert bezüglich der Sendeimpulse sind, entsteht statt einer niederfrequenten Mischimpulsfolge bei einer vorbekannten heterodynen Impulsrückmischung bei dieser erfindungsgemässen homodynen Impulsrückmischung ein Gleichsignal als Abtastergebnis, das einen hohen Betrag besitzt, wenn die Abtastimpulse mit den Messimpulsen oder mit den Referenzimpulsen zeitlich zusammentreffen. Im anderen Fall besitzt das Gleichsignal einen kleinen Betrag bzw. ist Null. Somit sind über die vom Steuermittel aktiv variierte Zeitverschiebung die zeitlichen Positionen der Messimpulse und der Referenzimpulse innerhalb der Impulsperiode dem Steuermittel bekannt, wodurch vom Steuermittel häufiger Abtastimpulse zur Detektion von Impulsen an diesen zeitlich vorbekannten Positionen generierbar sind, wodurch die Messzeit besser zur Detektion ausnutzbar ist.

Vorteilhaft ist eine zweite Verzögerungsschaltung vorhanden, die zwischen dem Lokaloszillator und einem Lichtsender zur Aussendung des Sendeimpulses angeordnet ist, weiter vorteilhaft mit zur ersten Verzögerungsschaltung verschiedenen Verzögerungszeiten, wodurch sich mehr Kombinationsmöglichkeiten bezüglich der realisierten Verzögerungszeiten und somit der Zeitauflösung ergeben.

Vorteilhaft ist (je) ein am Ausgang der Verzögerungsschaltung(en) angeordneter Pulsformer vorhanden, wodurch eine sehr kurze Impulsbreite und somit kurzzeitige Abtastung realisiert wird, wodurch die Messgenauigkeit erhöht wird. In diesem Fall muss der (vorteilhaft steuerbare) Lokaloszillator selbst kein (guter) Impulsgenerator sein. Weiter vorteilhaft befindet sich jeweils vor dem Impulsformer ein programmierbarer Frequenzteiler, wodurch sich (bei identischer Teilung) Impulsfolgen mit steuerbarer aber gleicher Wiederholfrequenz erzeugen lassen.

Vorteilhaft ist ein mit dem Steuermittel verbundener Phasendetektor vorhanden, an dessen beiden Eingängen die Sendeimpulse und die Abtastimpulse anliegen, wodurch die über die Verzögerungsschaltung(en) variierte Zeitverzögerung messbar und die korrekte Funktionsweise der Verzögerungsschaltung(en) kontrollierbar ist.

Vorteilhaft ist die Verzögerungsschaltung als digitale Verzögerungsschaltung ausgebildet, weiter vorteilhaft als vollintegrierter Verzögerungsbaustein, wodurch dieser direkt durch das Steuermittel digital ansteuerbar und so die exakte Verzögerungszeit einstellbar ist.

Vorteilhaft ist der Lichtdetektor eine Avalanche-Fotodiode (APD), deren Sperrvorspannung durch die vom Lokaloszillator gelieferte Abtastimpulsfolge überlagert wird und die zur homodynen Impulsmischung verwendet wird, wobei der Verstärkungsfaktor der Avalanche-Fotodiode in den Austastlücken der Abtastimpulsfolge wesentlich niedriger ist als während der Anwesenheit der Abtastimpulse, wodurch eine hochempfindliche Abtastung von empfangenen, schwachen Lichtsignalen erfolgt.

Vorteilhaft ist der Lichtdetektor mit einem Tiefpass verbunden, der weiter vorteilhaft mit einem Verstärker verbunden ist, der weiter vorteilhaft mit einem Analog-Digital-Wandler verbunden ist, der weiter vorteilhaft mit dem Steuermittel verbunden ist, wodurch das Gleichsignal störungssicher vom Steuermittel erfassbar ist.

Vorteilhaft wird im Abtastschritt das bei der Abtastung resultierende Abtastergebnis in Form eines analogen Gleichsignals zuerst tiefpassgefiltert, dann verstärkt, anschliessend mit einem Analog-Digital-Wandler abgetastet und digital dem Steuermittel zugeführt.

Vorteilhaft werden im Laufzeitbestimmungsschritt die Messimpulse und die Referenzimpulse in (nicht notwendig streng alternierend oder gleichverteilt) zeitlich aufeinanderfolgenden Abtastschritten abgetastet, wodurch deren Zeitverzögerung zu den Sendeimpulsen jeweils separat störungssicher erfassbar ist.

Vorteilhaft werden die abgetasteten Referenz- und Messimpulse zeitlich korreliert, wodurch sich die Zeitverschiebung ermitteln lässt.

Vorteilhaft werden im Laufzeitbestimmungsschritt die Messimpulse bzw. die Referenzimpulse in mehreren zeitlich aufeinanderfolgenden Abtastschritten wiederholt abgetastet und gemittelt, wodurch deren einzelne Abtastergebnisse akkumulierbar sind und die Zeitverzögerung zu den Sendeimpulsen aus der Superposition der Abtastergebnisse durch Korrelation robust bestimmbar ist.

Vorteilhaft werden im Berechnungsschritt die Zeitdifferenzen aus Laufzeitbestimmungsschritten mit verschiedenen Impulswiederholfrequenzen zur Berechnung der Distanz verwendet, wodurch die Eindeutigkeit der Messung auch bei grossen Distanzen gewährt ist. Weiter vorteilhaft wird die Impulswiederholfrequenz so eingestellt bzw. verändert, dass keine Überlappung zwischen den Referenz- und den Messimpulsen stattfindet.

Die Erfindung wird bezüglich eines vorteilhaften Ausführungsbeispiels näher erläutert mit:
- Fig. 1: als Impulsrückmisch-Laserdistanzhandmessgerät
- Fig. 2: als Algorithmus des Messverfahrens

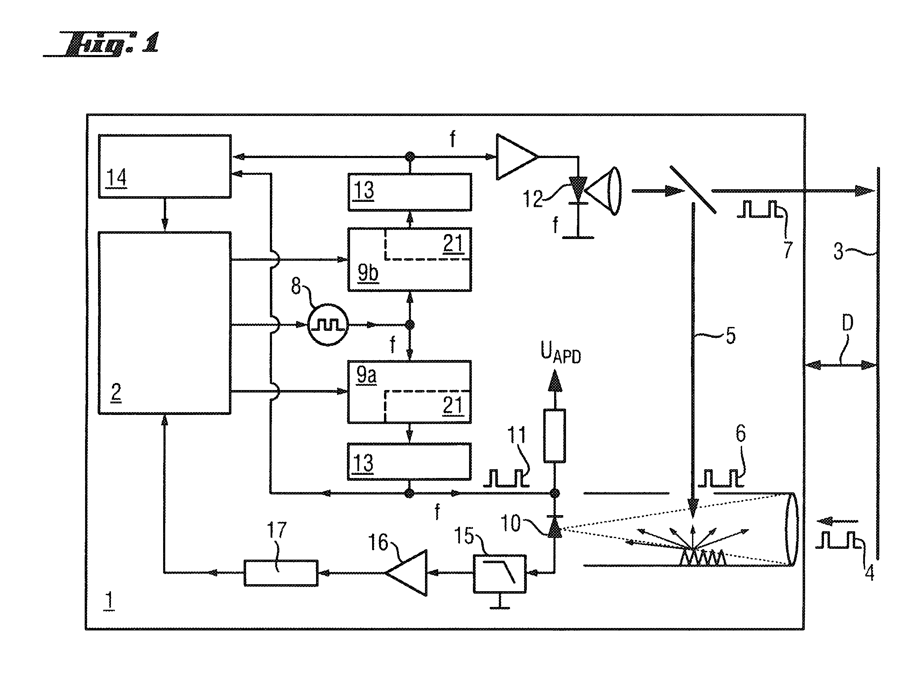

Nach Fig. 1 weist ein Impulsrückmisch-Laserdistanzhandmessgerät 1 ein Steuermittel 2 in Form eines Mikrocontrollers zur Berechnung der Distanz D zu einem Messobjekt 3 über zumindest eine ermittelbare, mit einer Impulswiederholfrequenz f periodische, Zeitdifferenz zwischen einem am Messobjekt 3 reflektierten Messimpuls 4 und einem über eine geräteinterne Referenzstrecke 5 gelaufenen Referenzimpuls 6 eines optisch ausgestrahlten Sendeimpulses 7 auf. Zudem sind ein gesteuerter Lokaloszillator 8 zur Erzeugung des Sendeimpulses 7 mit der Impulswiederholfrequenz f und zwei vom Steuermittel 2 variabel steuerbare Verzögerungsschaltungen 9a, 9b vorhanden, wobei die erste Verzögerungsschaltung 9a zwischen dem Lokaloszillator 8 und einem Lichtdetektor 10 angeordnet ist und bezüglich des Sendeimpulses 7 verzögerte Abtastimpulse 11 zur Abtastung des Messimpulses 4 und des Referenzimpulses 6 erzeugt. Die zweite Verzögerungsschaltung 9b ist zwischen dem Lokaloszillator 8 und einem Lichtsender 12 in Form einer Laserdiode zur Aussendung des Sendeimpulses 7 angeordnet. Die steuerbaren Verzögerungsschaltungen 9a, 9b in Form von digitalen, vollintegrierten Verzögerungsbausteinen weisen jeweils einen programmierbaren Frequenzteiler 21 vor den Ausgängen auf, denen jeweils Pulsformer 13 nachgeschaltet sind. Zudem ist ein mit dem Steuermittel 2 verbundener Phasendetektor 14 vorhanden, an dessen beiden Eingängen die Sendeimpulse 7 und die Abtastimpulse 11 anliegen. Der Lichtdetektor 10 ist als eine Avalanche-Fotodiode ausgebildet, deren Sperrvorspannung U_APD durch die vom Lokaloszillator 8 gelieferte Abtastimpulsfolge überlagert wird, wobei der Verstärkungsfaktor der Avalanche-Fotodiode in den Austastlücken der Abtastimpulsfolge wesentlich niedriger ist als während der Anwesenheit der Abtastimpulse 11. Weiterhin ist der Lichtdetektor 10 mit einem Tiefpass 15 verbunden, der mit einem Verstärker 16 verbunden ist, der mit einem Analog-Digital-Wandler 17 verbunden ist, der mit dem Steuermittel 2 verbunden ist. Dadurch wird das bei der Abtastung resultierende Abtastergebnis in Form eines analogen Gleichssignals zuerst tiefpassgefiltert, dann verstärkt, anschliessend mit dem Analog-Digital-Wandler 17 abgetastet und schliesslich digital dem Steuermittel 2 zugeführt.

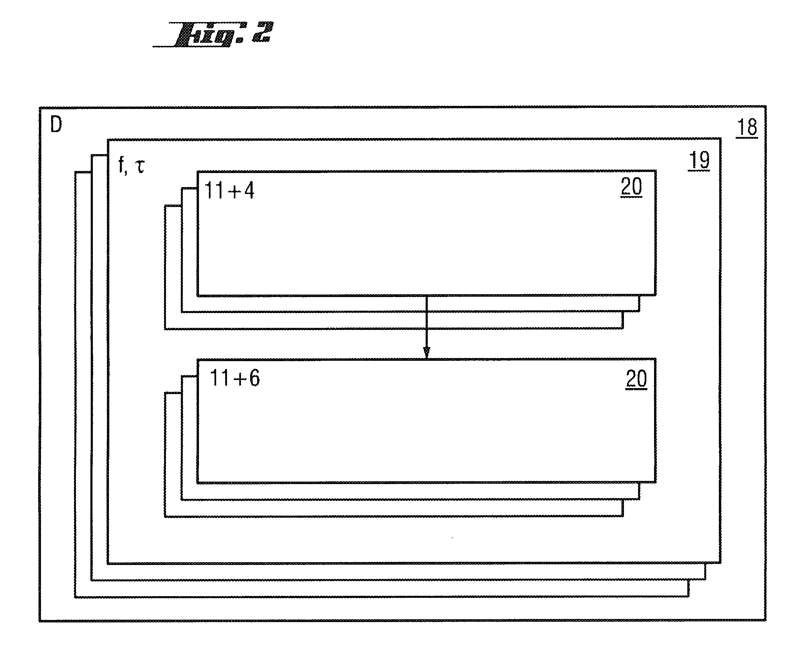

Nach Fig. 2 weist das vom Algorithmus des Steuermittels 2 (Fig.1) ausgeführte Messverfahren einen Berechnungsschritt 18 zur eindeutigen Berechnung der Distanz D auf. Dazu werden innerhalb des Berechnungsschritts 18 mehrere Laufzeitbestimmungsschritte 19 mit verschiedenen Impulswiederholfrequenzen f durchgeführt, die jeweils eine zugeordnete Zeitdifferenz [tau] zwischen dem Messimpuls 4 und dem Referenzimpuls 6 bestimmen, welche einzeln betrachtet jedoch noch nicht notwendig auf eine eindeutige Distanz D schliessen lassen. Diese wird jedoch im Berechnungsschritt 18 eindeutig als Lösung eines linearen Gleichungssystems aus allen Impulswiederholfrequenzen f und Zeitdifferenzen [tau] berechnet. Innerhalb dieser Laufzeitbestimmungsschritte 19 werden mehrere Abtastschritte 20 ausgeführt, welche mehrfach wiederholt die vom Lichtdetektor 10 (Fig.1) empfangenen und in einer Impulswiederholfrequenz f periodischen Messimpulse 4 (bzw. in zeitlich aufeinanderfolgenden Abtastschritten die Referenzimpulse 5) direkt am Lichtdetektor 10 (Fig.1) mit Abtastimpulsen 11 genau dieser Impulswiederholfrequenz f abtasten und das Abtastergebnis vom Steuermittel 2 (Fig.1) erfassen, wobei vom Steuermittel 2 (Fig.1) mittels der Verzögerungsschaltungen 9a, 9b (Fig.1) die Abtastimpulse 11 bezüglich der Sendeimpulse 7 variabel gesteuert zeitverzögert werden, und in dem übergeordneten Laufzeitbestimmungsschritt 19 die Zeitdifferenz [tau] zwischen den Messimpulsen 4 und den Referenzimpulsen 6 aus genau jeweils den Zeitverzögerungen berechnet wird, die erfolgreichen Abtastereignissen zugeordnet sind.

## Patentansprüche

1. Impulsrückmisch-Laserdistanzhandmessgerät mit einem Lichtsender (12) und einem Lokaloszillator (8), die einen Sendeimpuls (7) und einen Referenzimpuls (6) mit einer Impulswiederholfrequenz (f) erzeugen, wobei der Sendeimpuls (7) an einem Messobjekt (3) als Messimpuls (4) reflektiert wird und der Referenzimpuls (6) über eine geräteinteme Referenzstrecke (5) läuft, mit einem Lichtdetektor (10), der den Messimpuls (4) und den Referenzimpuls (6) empfängt, und mit einem Steuermittel (2) zur Berechnung der Distanz (D) zu dem Messobjekt (3) über zumindest eine ermittelbare, mit der Impulswiederholfrequenz (f) periodische, Zeitdifferenz ([fau]) zwischen dem Messimpuls (4) und dem Referenzimpuls (6), **dadurch gekennzeichnet, dass** der Lokaloszillator (8) Abtastimpulse (11) zur Abtastung des Messimpulses (4) und des Referenzimpulses (6) mit der Impulswiederholfrequenz (f) erzeugt und zumindest eine vom Steuermittel (2) steuerbare Verzögerungsschaltung (9a, 9b) vorhanden ist, die zwischen dem Lokaloszillator (8) und dem Lichtdetektor (10) und/oder dem Lichtsender (12) angeordnet ist und die gesteuert eine zeitliche Verzögerung zwischen den Abtastimpulsen (11) und dem Sendeimpuls (7) erzeugt.

2. Laserdistanzhandmessgerät nach Anspruch 1, **dadurch gekennzeichnet, dass** eine erste Verzögerungsschaltung (9a) vorhanden ist, die zwischen dem Lokaloszillator (8) und dem Lichtdetektor (10) angeordnet ist, und eine zweite Verzögerungsschaltung (9b) vorhanden ist, die zwischen dem Lokaloszillator (8) und dem Lichtsender (12) angeordnet ist.

3. Laserdistanzhandmessgerät nach Anspruch 1 oder 2, **dadurch gekennzeichnet, dass** ein am Ausgang der Verzögerungsschaltung (9a, 9b) angeordneter Pulsformer (13) vorhanden ist.

4. Laserdistanzhandmessgerät nach einem der Ansprüche 1 bis 3, **dadurch gekennzeichnet, dass** ein mit dem Steuermittel (2) verbundener Phasendetektor (14) vorhanden ist, an dessen beiden Eingängen die Sendeimpulse (7) und die Abtastimpulse (11) anliegen.

5. Laserdistanzhandmessgerät nach einem der Ansprüche 1 bis 4, **dadurch gekennzeichnet, dass** die Verzögerungsschaltung (9a, 9b) digital ausgebildet ist.

6. Laserdistanzhandmessgerät nach einem der Ansprüche 1 bis 5, **dadurch gekennzeichnet, dass** der Lichtdetektor (10) eine sperrspannungsvorgespannte Avalanche-Fotodiode ist, an der die Abtastimpulse 11 anliegen und die zur homodynen Impulsmischung verwendet wird.

7. Laserdistanzhandmessgerät nach einem der Ansprüche 1 bis 6, **dadurch gekennzeichnet, dass** der Lichtdetektor (10) mit einem Tiefpass (15) verbunden ist, der mit einem Verstärker (16) verbunden ist, der mit einem Analog-Digital-Wandler (17) verbunden ist, der mit dem Steuermittel (2) verbunden ist.

8. Messverfahren für ein Laserdistanzhandmessgerät (1) nach einem der Ansprüche 1 bis 7, bei dem innerhalb des Berechnungsschritts (18) der Distanz (D) aus der zumindest einen Zeitdifferenz ([tau]) zwischen dem Messimpuls (4) und dem Referenzimpuls (6) durch einen Algorithmus des Steuermittels (2), zumindest ein Laufzeitbestimmungsschritt (19) zur Bestimmung der Zeitdifferenz ([tau]) zwischen den Messimpulsen (4) und den Referenzimpulsen (6) ausgeführt wird, **dadurch gekennzeichnet, dass** innerhalb dessen mehrere Abtastschritte (20) ausgeführt werden, welche die vom Lichtdetektor (10) empfangenen und in einer Impulswiederholfrequenz (f) periodischen Messimpulse (4) bzw. Referenzimpulse (6) direkt am Lichtdetektor (10) mit Abtastimpulsen (11) genau dieser Impulswiederholfrequenz (f) abtasten und das Abtastergebnis vom Steuermittel (2) erfassen, wobei vom Steuermittel (2) mittels der Verzögerungsschaltung (9a, 9b) eine Verzögerung zwischen den Abtastimpulsen (11) und den Sendeimpulsen (7) variabel gesteuert wird, und dass in dem übergeordneten Laufzeitbestimmungsschritt (19) die Zeitdifferenz ([tau]) zwischen den Messimpulsen (4) und den Referenzimpulsen (6) aus genau jeweils den Zeitverzögerungen berechnet wird, die erfolgreichen Abtastereignissen zugeordnet sind.

9. Messverfahren nach Anspruch 8, **dadurch gekennzeichnet, dass** im Abtastschritt (20) das bei der Abtastung resultierende Abtastergebnis in Form eines analogen Gleichssignals zuerst tiefpassgefiltert, dann verstärkt, anschliessend mit einem Analog-Digital-Wandler (17) abgetastet und schliesslich digital dem Steuermittel (2) zugeführt wird.

10. Messverfahren nach Anspruch 8 oder 9, **dadurch gekennzeichnet, dass** im Laufzeitbestimmungsschritt (19) die Messimpulse (4) und die Referenzimpulse (6) in zeitlich aufeinanderfolgenden Abtastschritten (20) abgetastet werden.

11. Messverfahren nach Anspruch 10, **dadurch gekennzeichnet, dass** die abgetasteten Referenzimpulse (6) und Messimpulse (4) zeitlich korreliert werden.

12. Messverfahren nach einem der Ansprüche 8 bis 11, **dadurch gekennzeichnet, dass** im Laufzeitbestimmungsschritt (19) die Messimpulse (4) bzw. die Referenzimpulse (6) in mehreren zeitlich aufeinanderfolgenden Abtastschritten (20) wiederholt abgetastet und gemittelt werden.

13. Messverfahren nach einem der Ansprüche 8 bis 12, **dadurch gekennzeichnet, dass** im Berechnungsschritt (18) die Zeitdifferenzen ([tau]) aus mehreren Laufzeitbestimmungsschritten (19) mit verschiedener Impulswiederholfrequenzen (f) zur Berechnung der Distanz (D) verwendet werden.

## Claims

1. Handheld laser distance measuring device with pulse reflection mixing, comprising a light emitter (12) and a local oscillator (8) which generate a transmitted pulse (7) and a reference pulse (6) at a pulse repetition frequency (f), the transmitted pulse (7) being reflected at a measurement object (3) as a measuring pulse (4) and the reference pulse (6) travelling a reference distance (5) within the device, and comprising a light detector (10) which receives the measuring pulse (4) and the reference pulse (6) and a control means (2) for calculating the distance (D) to the measurement object (3) via at least one determinable time difference ([tau]), which is periodic with the pulse repetition frequency (f), between the measuring pulse (4) and the reference pulse (6), **characterized in that** the local oscillator (8) generates scanning pulses (11) for scanning the measuring pulse (4) and the reference pulse (6) at the pulse repetition frequency (f), and at least one delay circuit (9a, 9b) controllable by the control means (2) is present, is arranged between the local oscillator (8) and the light detector (10) and/or the light emitter (12) and generates a time delay between the scanning pulses (11) and the transmitted pulse (7) in a controlled manner.

2. Handheld laser distance measuring device according to Claim 1, **characterized in that** a first delay circuit (9a) arranged between the local oscillator (8) and the light detector (10) is present, and a second delay circuit (9b) arranged between the local oscillator (8) and the light emitter (12) is present.

3. Handheld laser distance measuring device according to Claim 1 or 2, **characterized in that** a pulse shaper (13) arranged at the output of the delay circuit (9a, 9b) is present.

4. Handheld laser distance measuring device according to any one of Claims 1 to 3, **characterized in that** a phase detector (14) connected to the control means (2) is present, to the two inputs of which phase detector (14) the transmitted pulses (7) and the scanning pulses (11) are applied.

5. Handheld laser distance measuring device according to any one of Claims 1 to 4, **characterized in that** the delay circuit (9a, 9b) is digital.

6. Handheld laser distance measuring device according to any one of Claims 1 to 5, **characterized in that** the light detector (10) is a reverse-biased avalanche photodiode to which the scanning pulses (11) are applied and which is used for homodyne pulse mixing.

7. Handheld laser distance measuring device according to any one of Claims 1 to 6, **characterized in that** the light detector (10) is connected to a low-pass filter (15) which is connected to an amplifier (16) which is connected to an analog-digital converter (17) which is connected to the control means (2).

8. Measurement method for a handheld laser distance measuring device (1) according to any one of Claims 1 to 7, wherein at least one transit time determining step (19) for determining the time difference ([tau]) between the measuring pulses (4) and the reference pulses (6) is carried out within the calculation step (18) for calculating the distance (D) from the at least one time difference ([tau]) between the measuring pulse (4) and the reference pulse (6) using an algorithm of the control means (2), **characterized in that**, a plurality of scanning steps (20) are performed within the transit time determining step (19), in which scanning steps (20) the measuring pulses (4) and the reference pulses (6), which are received by the light detector (10) and are periodic in a pulse repetition frequency (f), are scanned directly at the light detector (10) with scanning pulses (11) of precisely this pulse repetition frequency (f), and in which scanning steps (20) the scanning result is acquired from the control means (2), a delay between the scanning pulses (11) and the transmitted pulses (7) being controlled variably by the control means (2) by means of the delay circuit (9a, 9b), and **in that**, in the prioritized transit time determining step (19), the time difference ([tau]) between the measuring pulses (4) and the reference pulses (6) is calculated in each case from precisely the time delays which are associated with successful scanning results.

9. Measurement method according to Claim 8, **characterized in that**, in the scanning step (20), the scanning result produced during the scanning in the form of an analog DC signal is first low-pass filtered, then amplified, then scanned with an analog-digital converter (17), and finally is supplied in digital form to the control means (2).

10. Measurement method according to Claim 8 or 9, **characterized in that**, in the transit time determining step (19), the measuring pulses (4) and the reference pulses (6) are scanned in successive scanning steps (20).

11. Measurement method according to Claim 10, **characterized in that** the scanned reference pulses (6) and measuring pulses (4) are time-correlated.

12. Measurement method according to any one of Claims 8 to 11, **characterized in that**, in the transit time determining step (19), the measuring pulses (4) and the reference pulses (6) are repeatedly scanned and averaged in a plurality of successive scanning steps (20).

13. Measurement method according to any one of Claims 8 to 12, **characterized in that**, in the calculation step (18), the time differences ([tau]) from a plurality of transit time determining steps (19) are used with different pulse repetition frequencies (f) in order to calculate the distance (D).

## Revendications

1. Appareil portatif de mesure de distance à laser avec rétromélange d'impulsions, comportant un émetteur de lumière (12) et un oscillateur local (8) qui génèrent une impulsion d'émission (7) et une impulsion de référence (6) à une fréquence de répétition d'impulsions (f), dans lequel l'impulsion d'émission (7) est réfléchie sur un objet de mesure (3) en tant qu'impulsion de mesure (4) et l'impulsion de référence (6) parcourt une distance de référence interne à l'appareil (5), comportant un détecteur de lumière (10) qui reçoit l'impulsion de mesure (4) et l'impulsion de référence (6), et des moyens de commande (2) pour calculer la distance (D) jusqu'à l'objet de mesure (3) par l'intermédiaire d'au moins une différence de temps ([tau]) périodique, pouvant être déterminée en utilisant la fréquence de répétition d'impulsions (f), entre l'impulsion de mesure (4) et l'impulsion de référence (6), **caractérisé en ce que** l'oscillateur local (8) génère des impulsions de balayage (11) à la fréquence de répétition d'impulsions (f) afin de balayer l'impulsion de mesure (4) et l'impulsion de référence (6), et au moins un circuit à retard (9a, 9b) pouvant être commandé par les moyens de commande (2) est agencé entre l'oscillateur local (8) et le détecteur de lumière (10) et/ou l'émetteur de lumière (12) et génère un retard temporel entre les impulsions de balayage (11) et l'impulsion d'émission (6).

2. Appareil portatif de mesure de distance à laser selon la revendication 1, **caractérisé en ce qu'**un premier circuit à retard (9a) est agencé entre l'oscillateur local (8) et le détecteur de lumière (10), et un second circuit à retard (9b) est agencé entre l'oscillateur local (8) et l'émetteur de lumière (12).

3. Appareil portatif de mesure de distance à laser selon la revendication 1 ou 2, **caractérisé en ce qu'**un formeur d'impulsions (13) est agencé à la sortie du circuit à retard (9a, 9b).

4. Appareil portatif de mesure de distance à laser selon l'une quelconque des revendications 1 à 3, **caractérisé en ce qu'**il comporte un détecteur de phase (14) relié aux moyens de commande (2), les impulsions d'émission (7) et les impulsions de détection (11) étant appliquées aux deux entrées du détecteur de phase.

5. Appareil portatif de mesure de distance à laser selon l'une quelconque des revendications 1 à 4, **caractérisé en ce que** le circuit à retard (9a, 9b) est numérique.

6. Appareil portatif de mesure de distance à laser selon l'une quelconque des revendications 1 à 5, **caractérisé en ce que** le détecteur de lumière (10) est une photodiode à avalanche préalablement soumise à une tension de blocage, à laquelle les impulsions de balayage (11) sont appliquées et qui est utilisée pour le mélange homodyne des impulsions.

7. Appareil portatif de mesure de distance à laser selon l'une quelconque des revendications 1 à 6, **caractérisé en ce que** le détecteur de lumière (10) est relié à un filtre passe-bas (15) qui est relié à un amplificateur (16), lui-même relié à un convertisseur analogique-numérique (17) relié aux moyens de commande (2).

8. Procédé de mesure pour un appareil portatif de mesure de distance à laser (1) selon l'une quelconque des revendications 1 à 7, dans lequel au cours de l'étape de calcul (18) de la distance (D) à partir de la au moins une différence de temps ([tau]) entre l'impulsion de mesure (4) et l'impulsion de référence (6) effectué par un algorithme des moyens de commande (2), au moins une étape de détermination d'un temps de transit (19) est exécutée pour déterminer la différence de temps ([tau]) entre les impulsions de mesure (4) et les impulsions de référence (6), **caractérisé en ce que** pendant l'étape de détermination d'un temps de transit sont exécutées plusieurs étapes de balayage (20) qui balayent directement sur le détecteur de lumière (10) les impulsions de mesure (4) ou les impulsions de référence (6) périodiques à une fréquence de répétition d'impulsions (f) et reçues par le détecteur de lumière (10), en utilisant des impulsions de balayage (10) ayant précisément cette fréquence de balayage d'impulsions (f), et le résultat du balayage est acquis par les moyens de commande (2), un retard entre les impulsions de balayage (11) et les impulsions d'émission (7) étant commandé de manière variable à partir des moyens de commande (2) au moyen du circuit à retard (9a, 9b), et **en ce que** pendant l'étape (19) susmentionnée de détermination d'un temps de transit, la différence de temps ([tau]) entre les impulsions de mesure (4) et les impulsions de référence (6) est calculée précisément respectivement à partir des retards associés à des événements de balayage réussis.

9. Procédé de mesure selon la revendication 8, **caractérisé en ce que** pendant l'étape de balayage (20), le résultat de balayage résultant du balayage est d'abord filtré en passe-bas sous la forme d'un signal continu analogique, puis amplifié, ensuite balayé par un convertisseur analogique-numérique (17) et finalement transmis aux moyens de commande (2) sous forme numérique.

10. Procédé de mesure selon la revendication 8 ou 9, **caractérisé en ce que** pendant l'étape de détermination d'un temps de transit (19), les impulsions de mesure (4) et les impulsions de référence (6) sont balayées lors d'étapes de balayage (20) successives dans le temps.

11. Procédé de mesure selon la revendication 10, **caractérisé en ce que** les impulsions de référence (6) et les impulsions de mesure (4) balayées sont corrélées au temps.

12. Procédé de mesure selon l'une quelconque des revendications 8 à 11, **caractérisé en ce que** pendant l'étape de détermination d'un temps de transit (19), les impulsions de mesure (4) ou les impulsions de référence (6) sont balayées et mises en moyenne de manière répétée en plusieurs étapes de balayage (20) successives dans le temps.

13. Procédé de mesure selon l'une quelconque des revendications 8 à 12, **caractérisé en ce que** pendant l'étape de calcul (18), les différences de temps ([tau]) par rapport à plusieurs étapes de détermination d'un temps de transit (19) à différentes fréquences de répétition d'impulsions (f) sont utilisées pour calculer la distance (D).
